# EUROPEAN PATENT SPECIFICATION

(11) **EP 0 786 397 B1**
(45) Date of publication and mention of the grant of the patent: **24.10.2001**
(21) Application number: 96830356.0
(22) Date of filing: 20.06.1996
(51) Int. Cl.: B62D 55/20, B62D 55/205

(54) **A member for forming hinge caterpillars**
Ein Element zum Aufbau von gelenkigen Gleisketten
Un élément pour former des chenilles articulées

(30) Priority: 24.01.1996 IT MI960056 U
(43) Date of publication of application: 30.07.1997
(73) Proprietor: AGOM INTERNATIONAL S.r.l., Ossona (Milano) (IT)
(72) Inventor: Baiardo, Ernesto, Vanzago (IT)
(74) Representative: Mercurio, Franco

(56) References cited:
- EP-A- 0 052 772
- DE-A- 1 966 256
- US-A- 1 956 580
- US-A- 4 505 984

## Description

The present invention relates to a member for forming closed-loop caterpillars that are obtained by connecting in a hinge-like fashion each member to the adjacent one; said caterpillars being suited to be mounted onto various industrial vehicles, said vehicles being for example provided with buckets, excavators, hammers and similar apparatuses.

There are known rubber-made closed-loop caterpillars deriving from a fixed dimension blank. Said caterpillars have the draw-back that they must be substituted completely even if wear occors only on one partial length.

There are also known caterpillars that are exclusively composed of metal members that are hinged to one another with the draw-back that they are noisy and damage the roads.

There are also caterpillars that are composed of metal members which carry superposed thin plates bolted thereto. In such case a too, this solution exhibits various draw-backs, such as a higher cost and higher manpower requirements for repairs as they are often subject to detachment of said rubber plates.

Also the caterpillar that is the object of the italian utility model patent N. 221625 granted 23/7/1994 to the same assignee, even though it exhibits advantages as compared with the above-mentioned ones, requires at least part of the members forming the caterpillar to be substituted every time the total length of the caterpillar is to be changed as its application is changed.

The prior art comprising the EP 052.772, has the disadvantages, as seen in fig. 2, that between the two lateral couples of overhangs presents another couple with the elements 15 to be in contact with the drive wheel, without any guide members of the drive wheel and the idle pulleys.

This configuration has the drawback that the caterpillar has not a sufficient deformation to be adapted to the irregularities of the ground.

The object of the present invention is a caterpillar that does not present the drawback of the EP patent above cited. In fact the present caterpillar has a space between the lateral couples of overhangs in each member for the movement of the drive wheel and guide members for guiding the drive wheel and idle pulleys. This configuration permits a deformation of the caterpillar adapted to the irregularities of the ground.

Of course the structure is covered with rubber of elastomeric material in such a way that the cover outside is in contact with the ground and inside is around the drive wheel and the idle pulleys.

In the following description of an examplary non-limiting embodiment of the invention is described with reference to the enclosed figures, in which:
figure 1 is a schematic side view of a complete loop-shaped caterpillar;
figure 2 is a plant view according to arrow A in figure 1 of two caterpillar members connected with each other.
figure 3 is a cross section of two adjacents members according to line III-III of figure 2.

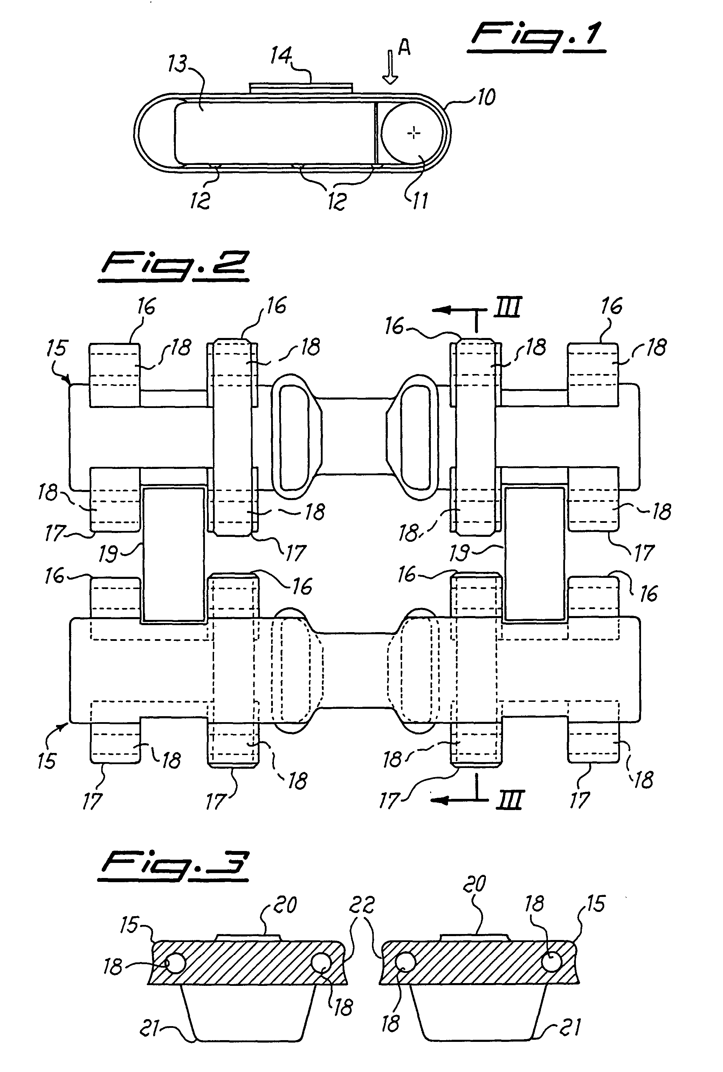

As can be seen from figure 1, the caterpillar 10 comprised of members 15 that are the object of the present invention and will be described in greater detail hereinafter is wrapped in a closed-loop fashion around a drive wheel 11 and idle pulleys 12 that are carried by a frame 13 having a mounting 14 on which a driving cabin (not shown) is mounted, said driving cabin being in turn connected to work means, such as excavating buckets, hammers and the like, also not shown.

Each member 15, that is the object of the present invention, is made of rubber or a similar material and is provided with protruding side overhangs 16 on one side and with other side overhangs 17 on the opposite side relative to the longitudinal axis of said member. According to the novelty of the present invention, said side overhangs 16 and 17 are provided in the same number and on the same position on either side of each member.

Inside said side overhangs supports with holes 18 are provided for linking a member to the adjacent one by means of linking pieces 19, said linking pieces being hinged with pins that are inserted in said holes 18.

Inside each member 15 a core is also buried (not visibile in the figures), said core being provided in order to make said member more stiff. In particular, said core can be made in one piece with said supports provided in holes 18 and both the supports and the core can advantageously made of metal or hard plastics.

As can be seen from figure 2, the overhangs 16 and 17, for example, are four on either part of member 15, so that when the members 15 are connected to one another to form the caterpillar, the overhangs of a member face the overhangs of the adjacent member, thereby easing the insertion of the linking pieces 19 between said overhangs 16 and 17 by means of pins in the holes 18.

According to the main feature of the invention, in order to solve the illustrated technical problem the overhangs of each member must be present in the same even number on either side and in the same position relative to one another.

As can be seen in particular from figure 3, the outer side of each member 15, that contacts the ground while rolling, consists of surface 20, whilst the inner side is provided with expansions 21 between which the idle pulleys 12 run, and the ends of the expansion 16 and 17 exhibit moreover a notch configuration 22 in order to avoid that during the run the ends of two contiguous members 15 meddle in one another.

Based on the above description, one can easily notice the various advantageous provided by the member that is the object of the present invention, said advantages being possibly summed up as follows:
the subject member is very cost-effective in that it offers the possibility of substituting only single linking pieces without substituting all or part of the members forming the caterpillars, as is the case with the caterpillars of the prior art.

In other words, in order to change the pitch between two members it is enought to only substitute the linking pieces.

Changes can be brought in the practical construction of the invention without actually falling outside of the scope of the present invention as specified in the following claims.

## Claims

1. A caterpillar connected to a drive wheel (11) and idle pulleys (12) and composed with adjacent members (15) with overhangs (16, 17) forming a couple, one in a side and the other in the opposite side of each member; and linking pieces (19) hinged between the overhangs (16) of a couple of a member (15) and the overhangs (17) of a couple of the adjacent member (15), **characterized in that** each member (15) has a space between said two couples with two guide expansions (21) in the inner side of each member (15) for the drive wheel (11) and idle pulleys (12).

2. A caterpillar as claimed in claim 1, **characterized in that** the ends of said overhangs (16, 17) have a notch-shaped configuration (22).

3. A caterpillar according to any of the previous claims, **characterized in that** the members (15) are covered by rubber of elastomeric material and made by metal or hard plastics in order to make stiff said members (15).

4. A caterpillar according to any of the previous claims, **characterized in that** said linking pieces (19) can have various lengths in order to obtain closed-loop caterpillars having corresponding total lengths.

## Patentansprüche

1. Eine Gleiskette, die mit einem Antriebsrad (11) und Losrollen (12) verbunden ist und aus benachbarten Teilen (15) mit Paare bildenden Vorsprüngen (16, 17) aufgebaut ist, wobei ein Paar auf der einen Seite und das andere auf der entgegengesetzten Seite von jedem Teil angeordnet ist; und aus Verbindungsteilen (19), die gelenkig zwischen den Vorsprüngen (16) eines Paares eines Teils (15) und den Vorsprüngen (17) eines Paares des benachbarten Teils (15) gelagert sind, **dadurch gekennzeichnet, daß** jedes Teil (15) einen Raum zwischen den zwei Paaren aufweist, mit zwei Führungserweiterungen (21) auf der Innenseite jedes Teils (15) für das Antriebsrad (11) und die Losrollen (12).

2. Gleiskette nach Anspruch 1, **dadurch gekennzeichnet, daß** die Enden der Vorsprünge (16, 17) eine kerbförmige Gestalt (22) aufweisen.

3. Gleiskette nach einem der vorstehenden Ansprüche, **dadurch gekennzeichnet, daß** die Teile (15) mit Gummi aus einem elastomeren Material ummantelt und aus Metall oder hartem Kunststoff hergestellt sind, um die Teile (15) formstabil zu machen.

4. Gleiskette nach einem der vorstehenden Ansprüche, **dadurch gekennzeichnet, daß** die Verbindungsteile (19) verschiedene Längen haben können, um endlose Gleisketten zu erhalten, die entsprechende Gesamtlängen aufweisen.

## Revendications

1. Chenille reliée à une roue d'entraînement (11) et à des poulies folles (12) et composée d'éléments adjacents (15) avec des surplombs (16, 17) formant une paire, l'un d'un côté et l'autre du côté opposé de chaque élément ; et de pièces de liaison (19) articulées entre les surplombs (16) d'une paire d'un élément (15) et les surplombs (17) d'une paire de l'élément adjacent (15), **caractérisée en ce que** chaque élément (15) comporte un espace entre lesdites deux paires avec deux prolongements de guidage (21) dans le côté intérieur de chaque élément (15) pour la roue d'entraînement (11) et les poulies folles (12).

2. Chenille selon la revendication 1, **caractérisée en ce que** les extrémités desdits surplombs (16, 17) ont une configuration en forme d'encoche (22).

3. Chenille selon l'une quelconque des revendications précédentes, **caractérisée en ce que** les éléments (15) sont recouverts de caoutchouc en un matériau élastomère et sont réalisés en métal ou en matière plastique dure afin de rendre rigides lesdits éléments (15).

4. Chenille selon l'une quelconque des revendications précédentes, **caractérisée en ce que** lesdites pièces de liaison (19) ont différentes longueurs afin d'obtenir des chenilles à boucles fermées ayant des longueurs totales correspondantes.
